# EUROPÄISCHE PATENTSCHRIFT

(11) **EP 0 445 679 B1**
(45) Veröffentlichungstag und Bekanntmachung des Hinweises auf die Patenterteilung: **15.02.1995**
(21) Anmeldenummer: 91103178.9
(22) Anmeldetag: 02.03.1991
(51) Int. Cl.: B23H 3/04

(54) **Verfahren und Einrichtung zur Herstellung von elektrisch leitenden Sondenspitzen**
Method and apparatus for fabricating electrically conductive probe heads
Méthode et appareillage de réalisation de têtes de sonde conductrices

(30) Priorität: 08.03.1990 DE 4007291
(43) Veröffentlichungstag der Anmeldung: 11.09.1991
(73) Patentinhaber: FORSCHUNGSZENTRUM JÜLICH GMBH, 52425 Jülich (DE)
(72) Erfinder: Lemke, Heiko, W-6303 Hungen (DE); Göddenhenrich, Thomas, W-5170 Jülich (DE); Bochem, Hans-Peter, W-5170 Jülich (DE); Hartmann, Uwe, Dr., W-5162 Niederzier (DE)

(56) Entgegenhaltungen:
- DE-A- 3 329 482
- US-A- 3 696 013
- PATENT ABSTRACTS OF JAPAN vol. 13, no. 385 (M-864)25. August 1989 & JP-A-1 135 430 (FUJITSU) 29 Mai 1989
- BRITISH JOURNAL OF APPLIED PHYSICS Bd. 14, Nr. 4, April 1963, LETCHWORTH GBSeiten 218 - 220; A. FOURDEUX AND A. WRONSKI: 'NEW ELEKTROLYTIC METHOD FOR CUTTING AND SHAPING METAL SPECIMENS'.
- PATENT ABSTRACTS OF JAPAN vol. 13, no. 224 (C-599)24. Mai 1989 & JP-A-1 036 799 (SONY) 7. Februar 1989

## Beschreibung

Die Erfindung bezieht sich auf ein Verfahren zur Herstellung von elektrisch leitenden Sondenspitzen, die durch elektrisches Bearbeiten eines Drahtes aus elektrisch leitendem Material ausgebildet werden. Gegenstand der Erfindung ist auch eine Einrichtung zur Durchführung des Verfahrens.

Als nächstliegender Stand der Technik wurde eine Veröffentlichung von A. Fourdeux und A. Wronski "New electrolytic method for cutting and shaping metal specimens" in British Journal of Applied Physics, Bd. 14, Nr. 4, 1963, S. 218 bis 220 ermittelt.

Elektrisch leitende Sondenspitzen werden insbesondere bei Rasterkraft- oder Rastertunnel-Mikroskopen als Rasternadeln im Van der Waals'schen Wechselwirkungsfeld oder im magnetischen Feld oder als Tunnelspitzen zur Messung des Tunnelstroms benötigt. Die Eigenschaften solcher Sondenspitzen müssen für derartige Anwendungen ausreichend definiert sein, um den mit den Rastermikroskopen im Rasterpunkt ermittelten Meßwert mit gewünschter Präzision qualitativ und quantitativ auswerten zu können. Angestrebt wird ein Herstellungsverfahren für die Sondenspitzen, bei dem die Eigenschaften der Spitzen mit hoher Reproduzierbarkeit erreichbar sind. Es wird hierzu von elektrolytischer Bearbeitung der aus elektrisch leitendem Material bestehenden Sondenspitzen ausgegangen.

Es ist bekannt, Drähte aus elektrisch leitendem Material als Elektrode geschaltet in eine Elektrolytlösung zu tauchen und das Drahtmaterial bis zur Ausbildung einer Sondenspitze elektrolytisch abzutragen. Aufgabe der Erfindung ist es, möglichst feine Spitzen mit hoher Präzision und reproduzierbaren Eigenschaften herstellen zu können.

Die Aufgabe wird gemäß der Erfindung durch die in Patentanspruch 1 angegebenen Maßnahmen gelöst. Der Draht wird in eine elektrolytisch wirksame Flüssigkeitsschicht aus einer Elektrolytlösung eingetaucht, die von einem elektrisch isolierend wirkenden Isolator umgeben ist. Der Draht, der ein geführtes Ende und ein freies Ende und dazwischen einen Drahtbereich aufweist, der zur Ausbildung der Sondenspitze vorgesehen ist, wird derart in die Elektrolytlösung eingetaucht, daß nur der Drahtbereich zur Ausbildung der Sonderspitze mit der elektrolytisch wirksamen Flüssigkeitsschicht in Berührung steht und das freie Ende des Drahtes in den Isolator eingeführt ist. Während seiner elektrolytischen Bearbeitung wir der Draht gedehnt, bis er unter Ausbildung dieser Spitze im zur Ausbildung dieser Spitze vorgesehenen Drahtbereich reißt. Dabei wird der Draht als eine der Elektroden innerhalb einer Ringelektrode gehalten, an der die Elektrolytlösung eine am elektrischen Leiter der Ringelektrode aufgespannte Flüssigkeitsmembran bildet, die von Luft als Isolator umgeben ist. Zur Herstellung der Sondenspitze wird also der zu bearbeitende Draht mit seinem freien Ende durch die Flüssigkeitsmembran soweit hindurchgestoßen, daß der für die Ausbildung der Sondenspitze vorgesehene Drahtbereich von der als Flüssigkeitsmembran aufgespannten Elektrolytlösung umgeben ist. Die Form der Sondenspitze ist bei diesem Verfahren abhängig von der Stärke der Flüssigkeitsmembran, mit dünner werdender Flüssigkeitsschicht werden die ausgebildeten Sondenspitze feiner und die Krümmungsradien an den Enden der Sondenspitzen geringer. Einfluß auf die Form der Sondenspitzen nehmen auch die jeweils angelegte Spannung bzw. der fließende elektrische Strom.

Es hat sich herausgestellt, daß auf diese Weise Sondenspitzen herstellbar sind, die an ihren Spitzenenden sehr kleine Krümmungsradien und eine sehr gleichmäßige Oberflächenstruktur aufweisen. Die Spitzeneigenschaften sind soweit reproduzierbar, daß bei Verwendung der Sondenspitzen als Rasternadeln oder Tunnelspitzen mit der Ausbildung wohldefinierter magnetischer oder elektrischer Felder zu rechnen ist.

Zum Dehnen des zu bearbeitenden Drahtbereiches wird der Draht zweckmäßig an seinem in den Isolator ragenden freien Ende gezogen, Patentanspruch 2.

Mit Patentansprüchen 3 und 4 wird eine geeignete Einrichtung zur Durchführung des erfindungsgemäßen Verfahrens angegeben. Es ist eine elektrolytisch wirksame Flüssigkeitsschicht vorgesehen, die zwischen einer Ringelektrode als Aufspanneinrichtung eine aus der Elektrolytlösung bestehende Flüssigkeitsmembran bildet, wobei als Isolator die die Flüssigkeitsmembran umgebende Luft genutzt wird. Zur Ausbildung der Sondenspitze ist ein Draht durch die Flüssigkeitsmembran hindurch geführt, der zu seiner elektrolytischen Bearbeitung an einer Spannungsquelle als Gegenelektrode zur Ringelektrode angeschlossen ist. Der Draht ist in der Weise in die Elektrolytlösung eintauchbar, daß ein für die Ausbildung einer Sondenspitze vorgesehener Drahtbereich, der im folgenden Bearbeitungsbereich genannt wird, und der zwischen einem geführten und einem freien Ende des Drahtes angeordnet ist, mit der Flüssigkeitsschicht in Berührung steht. Am freien Ende des Drahtes greift eine Zugkraft an, die den Bearbeitungsbereich während des elektrolytischen Abtragens des Drahtmaterials dehnt. Zur Dehnung des Bearbeitungsbereiches ist das freie Ende des Drahtes zweckmäßig durch ein Gewicht belastet.

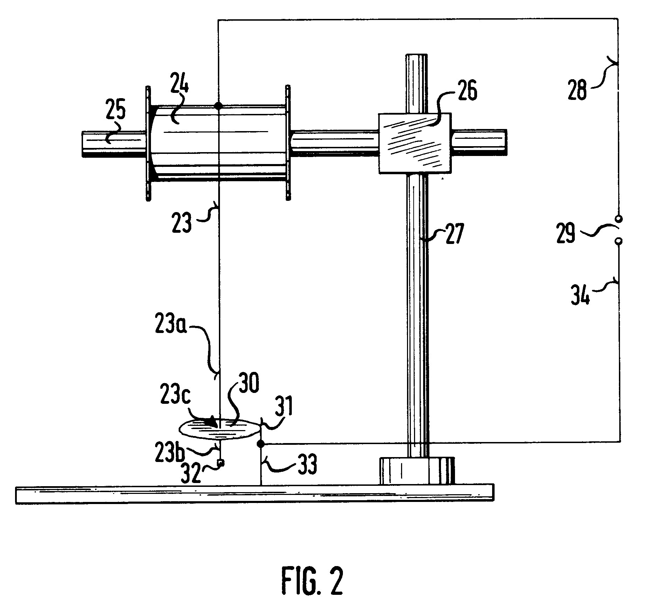

Die Erfindung wird nachfolgend anhand eines Ausführungsbeispiels näher erläutert. Die Zeichnung zeigt eine Einrichtung zur elektrolytischen Herstellung einer Sondenspitze mittels einer Ringelektrode, die als Träger für eine Elektrolytflüssigkeitsmembran dient.

In der Zeichnung ist schematisch eine Einrichtung zur elektrolytischen Herstellung von Sondenspitzen dargestellt, bei der ein zur Ausbildung der Sondenspitzen zu bearbeitender Draht 23 mit einem geführten Ende 23a, einem freien Ende 23b und einem Bearbeitungsbereich 23c elektrolytisch bearbeitet wird. Der Draht 23 ist auf einer drehbaren Drahtrolle 24 aufgewickelt und beim Drehen der Drahtrolle bewegbar. Die Drahtrolle 24 ist auf einer Achse 25 rotierbar gelagert, die Achse 25 wird über ein Ankerkreuz 26 von einem Stativ 27 abgestützt. Der Draht 23 steht mittels einer elektrischen Leitung 28 elektrisch leitend mit einer der Elektroden einer Spannungsquelle 29 in Verbindung.

Bei der dargestellten Einrichtung durchstößt der Draht 23 mit seinem freien Ende 23b eine als Flüssikgeitsmembran 30 an einer Ringelektrode 31 aufgespannte Elektrolytlösung. Das freie Ende 23b ist mit einem Gewicht 32 beschwert, um den Draht 23 während seiner elektrolytischen Bearbeitung zu spannen. Die Ringelektrode 31 wird über eine gegenüber dem Stativ 27 elektrisch isolierte Befestigung 33 abgestützt und ist über eine elektrische Leitung 34 an einer Gegenelektrode der Spannungsquelle 29 angeschlossen.

Werden die Ringelektroden 31 und der Draht 23 mit der Spannungsquelle 29 verbunden, wird das Drahtmaterial infolge der dann elektrolytisch wirksamen Flüssigkeitsmembran 30 zwischen Ringelektrode und Draht im Bearbeitungsbereich 23c abgetragen. Der Drahtdurchmesser im Bearbeitungsbereich verringert sich. Während des Materialabtrags übt unter Schwerkrafteinwirkung das Eigengewicht des freien Endes 23b des Drahtes 23, im Ausführungsbeispiel zusätzlich das Gewicht 32 eine Zugkraft aus, die den Bearbeitungsbereich 23c bei sich verringerndem Drahtdurchmesser immer stärker dehnt. Am Ende der Bearbeitung reißt der Draht 23, sein freies Ende 23c fällt nach unten.

Zur Bearbeitung eines Wolframdrahtes wurde eine 0,3 molare Natronlauge benutzt, die sich als Flüssigkeitsmembran an der Ringelektrode 31 aufspannen läßt. Der Ringdurchmesser der Ringelektrode, die aus Platin bestand, betrug 5 mm. Der zu bearbeitende Wolframdraht war 50 »m stark. Die Bearbeitung des Wolframdrahtes erfolgte unter elektrolytischen Polierbedingungen, wobei Spannung U und Strom I folgenden Werten entsprachen: U = 5V, I = 25 mA. Die in der Flüssigkeitsmembran bearbeitete Wolframsonde wies nach ihrer Bearbeitung einen Spitzenradius von 50 nm auf.

Sondenspitzen mit Spitzenradien von etwa 10 nm wurden wie folgt erzeugt: Der Wolframdraht wurde zunächst im Wechselspannungsbetrieb elektrolytisch bis auf eine Stärke von 50 »m, abgeätzt. Danach wurde im Gleichspannungsbetrieb weitergearbeitet, wobei der Wolframdraht als Anode, die Platinringelektrode als Kathode geschaltet war. Es wurden dabei ebenfalls Polierbedingungen eingestellt, die Spannung U betrug U = 5 V, der Strom I wies einen Wert von I = 25 mA auf.

## Patentansprüche

1. Verfahren zur Herstellung von elektrisch leitenden Sondenspitzen durch elektrolytisches Bearbeiten eines Drahtes (23) aus elektrisch leitendem Material, wobei der Draht (23) in eine elektrolytisch wirksame Flüssigkeitsschicht (30) aus einer Elektrolytlösung, die von zumindest einem elektrisch isolierend wirkenden Isolator umgeben ist, eingetaucht wird, und wobei ein für die Ausbildung der Sondenspitze vorgesehener Drahtbereich (23c) zwischen einem geführten (23a) und einem freien Ende (23b) des Drahtes (23) mit der elektrolytisch wirksamen Flüssigkeitsschicht (30) in Berührung gebracht und das geführte und freie Ende des Drahtes (23a, 23b) in den Isolator eingeführt wird, und wobei der Drahtbereich (23c) während seiner elektrolytischen Bearbeitung unter vorgegebener Verminderung seines Drahtquerschnitts bis zum Ablösen des freien Endes (23b) vom geführten Ende (23a) gedehnt wird, wobei als Isolator Luft genutzt wird und die Elektrolytlösung eine an einer Ringelelektrode (31) aufgespannte Flüssigkeitsmembran (30) bildet.

2. Verfahren nach Anspruch 1,
**dadurch gekennzeichnet,**
daß der Draht an seinem in den Isolator ragenden freien Ende gezogen wird.

3. Einrichtung zum Herstellen von elektrisch leitenden Sondenspitzen durch elektrolytisches Bearbeiten eines Drahtes (23) aus elektrisch leitendem Material, wobei eine von zumindest einem elektrisch isolierend wirkenden Isolator umgebene elektrolytisch wirksame Flüssigkeitsschicht (30) aus einer Elektrolytlösung vorgesehen ist, in die der Draht (23) zur elektrolytischen Bearbeitung als eine an einer Spannungsquelle (29) angeschlossene Elektrode derart eingetaucht ist, daß ein für die Ausbildung der Sondenspitze vorgesehener Drahtbereich, im folgenden Bearbeitungsbereich (23c) genannt, zwischen einem geführten und einem freien Ende (23a, 23b) des Drahtes (23) mit der Flüssigkeitsschicht (30) in Berührung steht und das freie Ende (23a, 23b) des Drahtes (23) in den Isolator ragt, und am freien Ende (23b) des Drahtes (23) eine den Bearbeitungsbereich (23c) während seiner elektrolytischen Bearbeitung unter Verminderung des Drahtquerschnitts bis zum Ablösen des freien Endes (23b) vom geführten Ende (23a) dehnende Zugkraft angreift, sowie in die Elektrolytlösung eine Gegenelektrode (31) eingeführt ist, die den Draht als Ringelelektrode (31) umgibt und die Elektrolytlösung an der Ringelektrode (31) als Flüssigkeitsmembran (30) aufspannt, und als Isolator Luft genutzt wird.

4. Einrichtung nach Anspruch 3,
**dadurch gekennzeichnet**,
daß der Draht (23) an seinem in den Isolator ragenden freien Ende (23b) durch ein Gewicht (32) belastet ist.

## Claims

1. A method of producing electrically conducting probe tips by the electrolytic machining of a wire (23) made of electrically conducting material, wherein the wire (23) is immersed in an electrolytically active liquid layer (30) of an electrolyte solution which is surrounded by at least one insulator acting as an electrical insulator, and wherein a wire region (23c) which is provided for the formation of the probe tip is brought into contact with the electrolytically active liquid layer (30) between a guided (23a) and a free end (23b) of the wire (23) and the guided and free ends of the wire (23a, 23b) are introduced into the insulator, and wherein the wire region (23c) is stretched during its electrolytic machining with a predetermined reduction of its wire cross-section until the free end (23b) is detached from the guided end (23a), wherein air is used as the insulator and the electrolyte solution forms a liquid membrane (30) spread on a ring electrode (31).

2. A method according to claim 1, characterised in that the wire is pulled at its free end projecting into the insulator.

3. A device for producing electrically conducting probe tips by the electrolytic machining of a wire (23) made of electrically conducting material, wherein an electrolytically active liquid layer (30) of an electrolyte solution is provided which is surrounded by at least one insulator acting as an electrical insulator, into which liquid layer the wire (23) is immersed for electrolytic machining as an electrode connected to a voltage source (29) in such a way that a wire region which is provided for the formation of the probe tip and which is hereinafter called the machining region (23c) is in contact with the liquid layer (30) between a guided and a free end (23a, 23b) of the wire (23) and the free end (23a, 23b) of the wire (23) projects into the insulator, and a tensile force acts at the free end (23b) of the wire (23), which tensile force stretches the machining region (23c) during its electrolytic machining with a reduction of the wire cross-section until the free end (23b) is detached from the guided end (23a), and a counter electrode (31) is introduced into the electrolyte solution, which counter electrode surrounds the wire as a ring electrode (31) and spreads the electrolyte solution on the ring electrode (31) as a liquid membrane (30), and air is used as the insulator.

4. A device according to claim 3, characterised in that the wire (23) is loaded by a weight (32) at its free end (23b) projecting into the insulator.

## Revendications

1. Procédé pour fabriquer des têtes de sonde électriquement conductrices par usinage électrolytique d'un fil (23) formé d'un matériau électriquement conducteur, et selon lequel on immerge le fil (23) dans une couche liquide (30) qui a un effet électrolytique et est formée par une solution électrolytique, qui est entourée par au moins un isolateur réalisant une isolation électrique, et selon lequel on place une partie (23c) du fil, qui est prévue pour la formation de la tête de sonde, entre une extrémité guidée (23a) et une extrémité libre (23b) du fil (23), en contact avec la couche liquide (30) ayant une action électrolytique, et on introduit l'extrémité guidée et l'extrémité libre (23a,23b) du fil dans l'isolateur, et selon lequel on étire la partie (23c) du fil, pendant son traitement électrolytique, en réduisant à un degré prédéterminé sa section transversale jusqu'au détachement de l'extrémité libre (23b) par rapport à l'extrémité guidée (23a), et selon lequel on utilise de l'air comme isolateur, et la solution électrolytique forme une membrane liquide (30) tendue sur une électrode annulaire (31).

2. Procédé selon la revendication 1, caractérisé en ce qu'on tire le fil au niveau de son extrémité libre qui pénètre dans l'isolateur.

3. Dispositif pour fabriquer des têtes de sonde électriquement conductrices par usinage électrolytique d'un fil (23) réalisé en un matériau électriquement conducteur, et dans lequel il est prévu une couche liquide (30) qui a un effet électrolytique, est entouré par au moins un isolateur réalisant une isolation électrique, et est constituée par une solution électrolytique et dans laquelle le fil (23) est immergé, en vue de l'usinage électrolytique, sous la forme d'une électrode raccordée à une source de tension (23) de telle sorte qu'une partie du fil, qui est prévue pour la formation de la tête de sonde et qui sera désignée ci-après sous l'expression partie d'usinage (23c), entre une extrémité guidée et une extrémité libre (23a,23b) du fil (23) est en contact avec la couche liquide (30), et que l'extrémité libre (23a,23b) du fil (23) pénètre dans l'isolateur, et applique à l'extrémité libre (23b) du fil (23) une force de traction, qui étire la zone d'usinage (23c) tout en réduisant la section transversale du fil jusqu'au détachement de l'extrémité libre (23b) à partir de l'extrémité guidée (23a), et que dans la solution électrolytique est introduite une contre-électrode (31) qui entoure le fil sous la forme d'une électrode annulaire (31) et étend la solution électrolytique sur l'électrode annulaire (31) sous la forme d'une membrane liquide (30), et de l'air est utilisé en tant qu'isolateur.

4. Dispositif selon la revendication 3, caractérisé en ce que le fil (23) est chargé par un poids (32) au niveau de son extrémité libre (23b) qui pénètre dans l'isolateur.
